# EUROPÄISCHE PATENTSCHRIFT

(11) **EP 2 767 166 B1**
(45) Veröffentlichungstag und Bekanntmachung des Hinweises auf die Patenterteilung: **27.12.2017**
(21) Anmeldenummer: 14152308.4
(22) Anmeldetag: 23.01.2014
(51) Int. Cl.: A21B 3/13

(54) **Dreidimensionale Backform zum Herstellen von Backwaren**
Three-dimensional baking mould for production of baked goods
Moule de cuisson tridimensionnel pour la fabrication de produits de boulangerie

(30) Priorität: 13.02.2013 DE 102013202308
(43) Veröffentlichungstag der Anmeldung: 20.08.2014
(73) Patentinhaber: W.F. Kaiser U. Co. GmbH, 65582 Diez/Lahn (DE)
(72) Erfinder: Lindemann, Jörg, 56412 Görgeshausen (DE)
(74) Vertreter: BRP Renaud & Partner mbB Rechtsanwälte Patentanwälte Steuerberater

(56) Entgegenhaltungen:
- WO-A1-2012/113148
- AU-A4- 2012 101 011
- DE-U1- 9 308 379
- FR-A1- 2 909 273
- US-A- 2 939 299
- US-A1- 2012 321 767

## Beschreibung

Die Erfindung betrifft eine dreidimensionale Backform zum Herstellen von Backwaren.

Dreidimensionale Backformen dienen zum Backen von Kuchen, Torten, Kleingebäck und anderen Backwaren. Hauptzweck von Backformen ist es, die durch hohen Flüssigkeits- oder Fettgehalt weichen Teige wie Rühr- und Biskuitteig oder fettreiche Füllungen am Auseinanderfließen zu hindern, bis sich die Masse verfestigt hat.

Herkömmliche dreidimensionale Backformen sind häufig zweiteilig mit einem ersten und zweiten negativen Formteil ausgebildet, die aneinander befestigbar sind und in einem aneinander befestigten Zustand die gewünschte Negativform ergeben. Die beiden Formteile weisen eine derartige Geometrie auf, dass sie zusammen einen Hohlraum ausbilden, in welchen der zum Herstellen der Backwaren erforderliche Teig durch eine Aufnahmeöffnung einbringbar ist. Die Aufnahmeöffnung kann dabei von den beiden Formteilen jeweils teilweise ausgebildet werden. Nach Beendigung eines Backvorgangs in einem Backofen werden die beiden aneinander befestigten Formteile wieder voneinander getrennt, so dass sie das durch den Backvorgang gefestigte Backprodukt freigeben.

Eine derartige dreidimensionale Backform mit zwei negativen Formteilen, die in einem aneinander befestigten Zustand einen die Backform ergebenden Hohlraum begrenzen, behandelt die AU 2012 101 011 A4.

Die vorliegende Erfindung beschäftigt sich mit dem Problem, eine verbesserte Ausführungsform für eine dreidimensionale Backform anzugeben, welche sich insbesondere durch ein einfaches handling auszeichnet.

Dieses Problem wird durch den Gegenstand der unabhängigen Patentansprüche gelöst. Bevorzugte Ausführungsformen sind Gegenstand der abhängigen Ansprüche.

Die Erfindung beruht auf dem allgemeinen Gedanken, zwei eine Backform ergebenden Formteile mittels wenigstens eines Befestigungselements, vorzugsweise mittels zweier Befestigungselemente, aus Silikon aneinander zu befestigen. Ein solches Befestigungselement aus Silikon eignet sich zur einfachen und dennoch stabilen Befestigung der beiden negativen Formteile aneinander, so dass die beiden Formteile den zum Befüllen mit Teig erforderlichen Hohlraum bilden und diesen - mit Ausnahme der Aufnahmeöffnung - zuverlässig nach außen zur Umgebung hin abschließen. Die Befestigungselemente (Silikonklammern) halten die Backform während des Backens entsprechend zusammen und dienen zur vereinfachten Handhabung/Befestigung. Die Verwendung von Silikon als Material für das Befestigungselement stellt dabei sicher, dass dieses die für einen Backvorgang in einem Ofen erforderliche Hitzebeständigkeit aufweist. Gleichzeitig ist Silikon ein gegenüber Haushaltsreinigungsmitteln sehr resistentes Material, so dass sich das aus Silikon gefertigte Befestigungselement insbesondere für Reinigungsprozesse in einer Spülmaschine eignet.

Erfindungsgemäß ist das wenigstens eine Befestigungselement in der Art einer Silikonklammer mit zwei Klammerarmen ausgebildet, welche einen jeweiligen Befestigungsbereich der beiden Formteile in montiertem Zustand der Backform aneinanderdrücken. Auf diese Weise wird zwischen den beiden Formteilen ein zum Abdichten des durch die beiden Formteile gebildeten Hohlraums gegenüber der Umgebung erforderlicher Anpressdruck zwischen den beiden Formteilen sichergestellt.

Erfindungsgemäß weisen die beiden Formteile jeweils einen orthogonal vom Befestigungsbereich des Formteils abstehenden kragenartigen Befestigungsrand auf, an welchem das Befestigungselement zum Befestigen der beiden Formteile befestigbar ist. Dies ermöglicht eine besonders einfache Befestigung des Befestigungselements an den Formteilen. So können kragenartiger Befestigungsrand und Befestigungselement derart ausgebildet sein, dass das Befestigungselement in der Art einer C-förmigen Schiene auf die beiden Befestigungsränder der Formteile aufgeschoben werden kann, nachdem die beiden Formteile zur Montage der Backform aneinander zur Anlage gebracht worden sind.

Um den zum festen, insbesondere fluiddichten, Aneinanderdrücken der beiden Formteile vom Befestigungselement zu erzeugenden Anpressdruck auf einfache und somit kostengünstige Weise bereitstellen zu können, können die beiden Klammerarme federnd ausgebildet und im montiertem Zustand der Backform gegen die beiden Formteile vorgespannt sein. Gemäß dieser Ausführungsform drücken die beiden Klammerarme die beiden Formteile also durch Ausübung einer Federkraft aneinander.

Bei einer vorteilhaften Weiterbildung können die beiden Formteile jeweils wenigstens einen plattenartig ausgebildeten Kontaktbereich aufweisen, wobei die Kontaktbereiche in montiertem Zustand der Backform vorzugsweise spaltfrei aneinander anliegen. Der Kontaktbereich kann vorzugsweise zu einem den Hohlraum ausbildenden Bereich, in welchem das jeweilige Formteil eine dreidimensionale Oberflächenkontur aufweist, komplementär ausgebildet sein, d.h. diese beiden Bereiche ergänzen sich zum gesamten negativen Formteil. Durch die dreidimensionale Oberflächenkontur ist die eigentliche Form des Backprodukts festgelegt. Diese kann beispielsweise die Form einer Torte, eines Feuerwehrautops oder einer Tierfigur, o.ä. aufweisen.

Da die beiden Formteile im Kontaktbereich vorzugsweise spaltfrei aneinander anliegen, wirken die beiden Kontaktbereiche für den Hohlraum in der Art einer Dichtung, welches diesen gegen die Umgebung abdichtet. Somit kann sichergestellt werden, dass die über die Aufnahmeöffnung in den Hohlraum eingebrachte Zutaten nicht auf unerwünschte Weise durch einen Spalt zwischen den beiden Formteilen in die Umgebung austreten können.

Zum Zwecke einer besonders stabilen Befestigung der beiden Formteile, insbesondere während eines Befüllvorgangs des Hohlraums mit dem Teig, können bei einer besonders zweckmäßigen Ausführungsform die beiden Klammerarme der Silikonklammer derart ausgebildet sein, dass sie in einem montierten Zustand der Backform eine formschlüssige Verbindung mit den beiden Formteilen ausbilden.

In einer technisch besonders einfach und somit kostengünstig herzustellenden Ausführungsform kann die Silikonklammer als Profilschiene ausgebildet sein, welche ein einseitig offenes Profil mit einer im Wesentlichen C-förmige Konturaufweist. Gemäß dieser Ausführungsform hintergreifen die beiden Klammerarme im montierten Zustand der Backform die kragenartigen Befestigungsränder der beiden Formteile wenigstens teilweise.

In einer vorteilhaften Weiterbildung können die beiden Formteile jeweils einen orthogonal vom Befestigungsbereich der Formteile abstehenden Fußbereich aufweisen, über welche die Backform in montiertem Zustand aufstellbar ist. Bevorzugt ist die Aufnahmeöffnung des Hohlraums auf einer zum Fußbereich gegenüberliegenden Seite der Formteile angeordnet, so dass der Hohlraum der Backform in einem aufgestellten Zustand auf einfache und komfortable Weise durch die nach oben weisende Aufnahmeöffnung befüllt werden kann.

Vorzugsweise kann das Silikon eine Hitzebeständigkeit von wenigstens 250°C aufweist. Dies stellt sicher, dass das Befestigungselement auch bei den in Backöfen während des Backvorgangs auftretenden hohen Temperaturen von bis zu 250°C und mehr nicht hitzebedingt beschädigt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch
- Fig. 1: eine perspektivische Ansicht einer erfindungsgemäßen dreidimensionalen Backform,
- Fig. 2a: die dreidimensionale Backform in einer Draufsicht,
- Fig. 2b: eine das Befestigungselement in vergrößerter Darstellung zeigenden Teilansicht,
- Fig. 3: die dreidimensionale Backform in einer Seitenansicht.

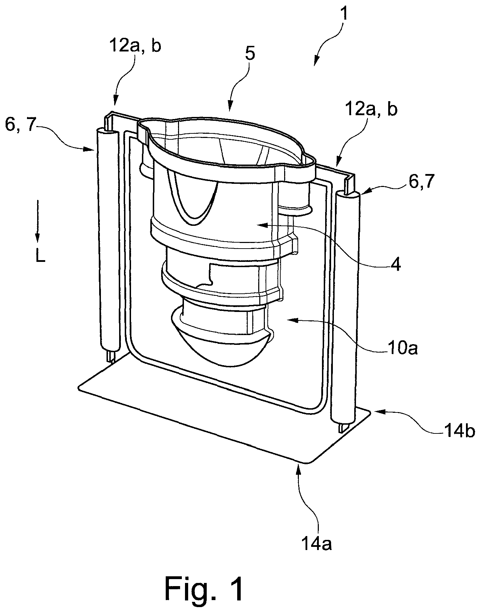

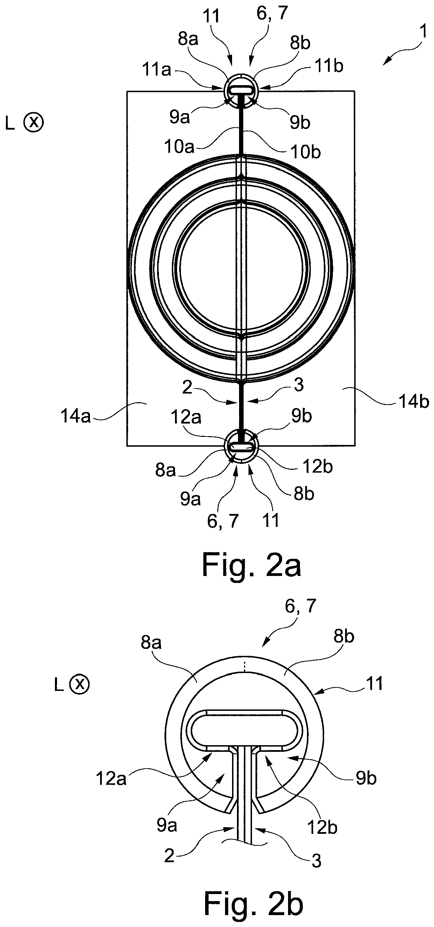

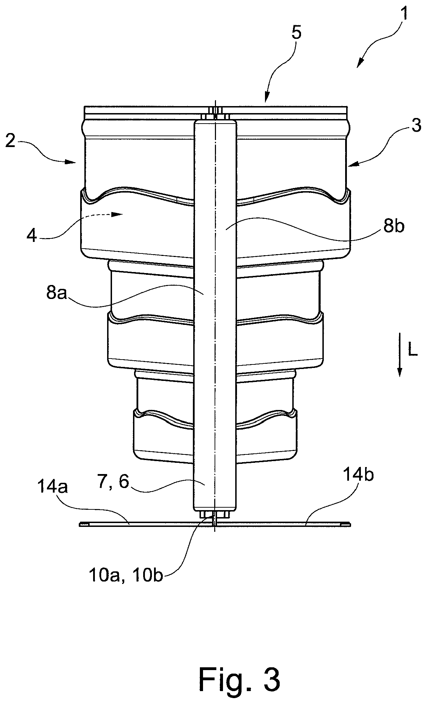

In der Figur 1 ist eine dreidimensionale Backform zum Herstellen von Backwaren in einer perspektivischen Ansicht dargestellt und mit dem Bezugszeichen 1 bezeichnet. Die Figuren 2a und 2b zeigen die Backform 1 schematisch in einer Draufsicht, die Figur 3 in einer Seitenansicht. Die dreidimensionale Backform 1 umfasst wie in der Darstellung der Figuren 2 und 3 gezeigt ein erstes negatives Formteil 2 und ein zweites negatives Formteil 3. Die beiden Formteile 2, 3 ergeben in einem aneinander befestigten Zustand die Backform 1. Die beiden Formteile 2, 3 bilden in einem aneinander befestigten Zustand einen Hohlraum 4 aus, in welchen der zum Herstellen der Backwaren erforderliche Teig durch eine Aufnahmeöffnung 5 einbringbar sind. Die Aufnahmeöffnung 5 wird durch beide Formteile 2, 3 jeweils teilweise ausgebildet.

Die beiden Formteile 2, 3 können jeweils einen plattenartig ausgebildeten Kontaktbereich 10a, 10b (vgl. Fig. 1) aufweisen, wobei die Kontaktbereiche 10a, 10b in montiertem Zustand der Backform 1 spaltfrei aneinander anliegen. Da die beiden Formteile 2, 3 im Kontaktbereich 10a, 10b im Wesentlichen spaltfrei aneinander anliegen, wirken die beiden Kontaktbereiche 10a, 10b für den Hohlraum 4 in der Art eines Dichtungselements, welches diesen gegen die Umgebung abdichtet. Somit kann sichergestellt werden, dass über die Aufnahmeöffnung 5 in den Hohlraum 4 eingebrachter Teig nicht auf unerwünschte Weise durch einen Spalt zwischen den beiden Formteilen 2, 3 in die Umgebung austritt.

Das erste Formteil 2 ist in dem in den Figuren 1 bis 3 gezeigten montierten Zustand der dreidimensionalen Backform 1 mittels zweier Befestigungselemente 6 aus Silikon an dem zweiten Formteil 3 befestigt (vgl. Figur 2a). Das Befestigungselement 6 aus Silikon eignet sich zur einfachen und dennoch stabilen Befestigung der beiden negativen Formteile 2,3 aneinander, so dass die beiden Formteile 2, 3 den Hohlraum 4 ausbilden und nach außen zur Umgebung hin abdichten können, so dass beim Befüllen des Hohlraums 4 mit Teig und auch während des eigentlichen Backvorgangs nichts aus dem Hohlraum austritt.

Die Verwendung von Silikon als Material für das Befestigungselement 6 stellt sicher, dass dieses die für einen Backvorgang erforderliche Hitzebeständigkeit aufweist. Gleichzeitig ist Silikon ein gegenüber Haushaltsreinigungsmitteln sehr resistentes Material, so dass das Befestigungselement 6 einzeln oder als Teil der gesamten Backform 1 beispielsweise auch in einer Spülmaschine gereinigt werden kann. Das für das Befestigungselement 6 verwendete Silikon kann eine Hitzebeständigkeit von wenigstens 250°C aufweisen, wodurch sichergestellt wird, dass das Befestigungselement 6 auch bei in Backöfen während des Backvorgangs auftretenden sehr hohen Temperaturen von bis zu 250°C und mehr nicht hitzebedingt beschädigt werden kann.

Das Befestigungselement 6 ist in der Art einer Silikonklammer 7 mit zwei Klammerarmen 8a, 8b ausgebildet, welche einen jeweiligen Befestigungsbereich 9a, 9b der beiden Formteile 2, 3 im montiertem Zustand der Backform 1 aneinanderdrücken. Das Befestigungselement 6 ist in der Figur 2b, welche eine Teilansicht der Figur 2a darstellt, vergrößert gezeigt. Im jeweiligen Befestigungsbereich 9a, 9b sind die beiden Formteile 2, 3 jeweils plattenartig ausgebildet, so dass durch den Befestigungsbereich 9a, 9b eine Hauptebene der jeweiligen Formteile 2, 3 definiert wird. Die beiden Klammerarme 8a, 8b können federnd ausgebildet und im montierten Zustand der Backform 1 gegen die beiden Formteile 2, 3 vorgespannt sein. Mittels der beiden Klammerarme 8a, 8b wird zwischen den beiden Formteilen 2, 3 ein Anpressdruck erzeugt, welcher sicherstellt, der durch die beiden Formteile 2, 3 gebildete Hohlraums 4 gegenüber der Umgebung abgedichtet wird.

Betrachtet man die Darstellung der Figur 2, so erkennt man, dass die beiden Klammerarme 8a, 8b der Silikonklammer 7 derart ausgebildet sind, dass sie in dem in der Figur 2a/b gezeigten montierten Zustand der Backform 1 eine formschlüssige Verbindung mit den beiden Formteilen 2,3 ausbilden. Hierzu weisen die beiden Formteile 2, 3 wie in der Figur 2b gezeigt jeweils einen orthogonal vom Befestigungsbereich 9a, 9b abstehenden kragenartigen Befestigungsrand 12a, 12b auf, an welchem das als Silikonklammer 7 ausgebildete Befestigungselement 6 zum Befestigen der beiden Formteile 2, 3 befestigbar ist. Dies ermöglicht eine besonders einfache Befestigung des Befestigungselements 6 an den Formteilen 2,3.

Die Silikonklammer 7 kann als Profilschiene 11 (vgl. Fig. 2b) ausgebildet sein, welche ein einseitig offenes Profil mit einem im Wesentlichen C-förmigen Querschnitt aufweist, d.h. die Profilschiene 11 weist einen im Wesentlichen C-förmigen Querschnitt auf. Die beiden Befestigungsränder 12a, 12b können im montierten Zustand der Backform 1 im Querschnitt ein T-förmiges Profil aufweisen. Wie in der Figur 2b gezeigt hintergreifen die beiden Klammerarme 8a, 8b im montierten Zustand der Backform 1 die kragenartigen Befestigungsränder 12a, 12b der beiden Formteile 2, 3. Bei einer Ausbildung der Silikonklammer 7 als Profilschiene 11 kann diese entlang der Längsrichtung L auf die beiden kragenartigen Befestigungsränder 9a, 9b der Formteile 2, 3 aufgeschoben werden, nachdem die beiden Formteile 2, 3 zur Montage der Backform 1 aneinander zur Anlage gebracht worden sind.

Die beiden Formteile 2, 3 können jeweils einen in den Figuren 2a und 3 dargestellten und orthogonal von einem Randbereich der Formteile 2, 3 abstehenden Fußbereich 14a, 14b aufweisen, über welche die Backform 1 in montiertem Zustand aufstellbar ist. Dies ermöglicht zur Durchführung des Backvorgangs eine komfortable Platzierung der Backform 1 in einem Backofen o.ä. Bevorzugt ist die Aufnahmeöffnung 5 des Hohlraums 4 auf einer zum Fußbereich 14a, 14b gegenüberliegenden Seite der Formteile 2, 3angeordnet, so dass der Hohlraum 4 der Backform 1 in einem aufgestellten Zustand auf einfache und komfortable Weise durch die nach oben weisende Aufnahmeöffnung 5 befüllt werden kann.

## Patentansprüche

1. Dreidimensionale Backform (1) zum Herstellen von Backwaren,
- mit einem ersten negativen Formteil (2) und einem zweiten negativen Formteil (3), die in einem aneinander befestigten Zustand die Backform (1) bilden,
- wobei die beiden Formteile (2, 3) einen Hohlraum (4) begrenzen, in welchen Teig durch eine von den beiden Formteile (2, 3) jeweils teilweise ausgebildete Aufnahmeöffnung (5) einbringbar ist,
- mit wenigstens einem Befestigungselement (6),
- wobei das erste Formteil (2) mittels des wenigstens einem Befestigungselementes (6), vorzugsweise mittels zweier Befestigungselemente (6), aus Silikon an dem zweiten Formteil (3) befestigbar oder befestigt ist,
- wobei das wenigstens eine Befestigungselement (6) in der Art einer Silikonklammer (7) mit zwei Klammerarmen (8a, 8b) ausgebildet ist, welche jeweilige Befestigungsbereiche (9a, 9b) der beiden Formteile (2, 3) im montierten Zustand der Backform (1) aneinanderdrücken,
**dadurch gekennzeichnet, dass**
die beiden Formteile (2, 3) jeweils einen orthogonal vom Befestigungsbereich (9a, 9b) des Formteils (2, 3) abstehenden kragenartigen Befestigungsrand (12a, 12b) aufweisen, an welchem das Befestigungselement (6) zum Befestigen der beiden Formteile (2, 3) befestigbar ist.

2. Backform (1) nach Anspruch 1,
**dadurch gekennzeichnet, dass**
die beiden Klammerarme (8a, 8b) federnd ausgebildet sind und im montierten Zustand der Backform (1) gegen die beiden Formteile (2, 3) vorgespannt sind und diese beiden Teile (2, 3) durch Ausübung einer Federkraft aneinanderdrücken.

3. Backform (1) nach Anspruch 1 oder 2,
**dadurch gekennzeichnet, dass**
die beiden Formteile (2, 3) jeweils wenigstens einen plattenartig ausgebildeten Kontaktbereich (10a, 10b) aufweisen, wobei die Kontaktbereiche (10a, 10b) im montierten Zustand der Backform (1) vorzugsweise spaltfrei aneinander anliegen.

4. Backform(1) nach einem der vorhergehenden Ansprüche,
**dadurch gekennzeichnet, dass**
die beiden Klammerarme (8a, 8b) der Silikonklammer (7) derart ausgebildet sind, dass sie in montiertem Zustand der Backform (1) eine formschlüssige Verbindung mit den beiden Formteilen (2, 3) bilden.

5. Backform (1) nach einem der vorhergehenden Ansprüche,
**dadurch gekennzeichnet, dass**
- die Silikonklammer (7) als Profilschiene (11) ausgebildet ist,
- die Profilschiene (11) ein einseitig offenes Profil mit einem im Wesentlichen C-förmigen Querschnitt aufweist ist,
- die beiden Klammerarme (8a, 8b) im montierten Zustand der Backform (1) die kragenartigen Befestigungsränder (12a, 12b) der beiden Formteile (2, 3) wenigstens teilweise hinter-/umgreifen.

6. Backform (1) nach einem der vorhergehenden Ansprüche,
**dadurch gekennzeichnet, dass**
das Silikon eine Hitzebeständigkeit von wenigstens 250°C aufweist.

## Claims

1. Three-dimensional baking mould (1) for producing baked goods,
- having a first negative mould portion (2) and a second negative mould portion (3) which in a state secured to each other form the baking mould (1),
- wherein the two mould portions (2, 3) delimit a hollow space (4) in which dough can be introduced through a receiving opening (5) which is in each case partially formed by the two mould portions (2, 3),
- having at least one securing element (6),
- wherein the first mould portion (2) can be secured or is secured to the second mould portion (3) by means of the at least one securing element (6), preferably by means of two securing elements (6), of silicone,
- wherein the at least one securing element (6) is constructed in the manner of a silicone bracket (7) having two bracket arms (8a, 8b) which press respective securing regions (9a, 9b) of the two mould portions (2, 3) against each other in the assembled state of the baking mould (1),
**characterised in that**
the two mould portions (2, 3) each have a collar-like securing edge (12a, 12b) which protrudes orthogonally from the securing region (9a, 9b) of the mould portion (2, 3) and to which the securing element (6) can be secured in order to secure the two mould portions (2, 3).

2. Baking mould (1) according to claim 1,
**characterised in that**
the two bracket arms (8a, 8b) are constructed in a resilient manner and in the assembled state of the baking mould (1) are pretensioned against the two mould portions (2, 3) and press these two portions (2, 3) against each other by applying a resilient force.

3. Baking mould (1) according to claim 1 or 2,
**characterised in that**
the two mould portions (2, 3) each have at least one contact region (10a, 10b) which is constructed in a plate-like manner, wherein the contact regions (10a, 10b) in the assembled state of the baking mould (1) are preferably in abutment with each other in a gap-free manner.

4. Baking mould (1) according to any one of the preceding claims,
**characterised in that**
the two bracket arms (8a, 8b) of the silicone bracket (7) are constructed in such a manner that, in the assembled state of the baking mould (1), they form a positive-locking connection to the two mould portions (2, 3).

5. Baking mould (1) according to any one of the preceding claims,
**characterised in that**
- the silicone chamber (7) is constructed as a profile rail (11),
- the profile rail (11) has a profile which is open at one side and which has a substantially C-shaped cross-section,
- the two bracket arms (8a, 8b) in the assembled state of the baking mould (1) at least partially engage behind/around the collar-like securing edges (12a, 12b) of the two mould portions (2, 3).

6. Baking mould (1) according to any one of the preceding claims,
**characterised in that**
the silicone has a heat-resistance of at least 250°C.

## Revendications

1. Moule de cuisson (1) tridimensionnel pour la fabrication de produits de boulangerie,
- avec une première partie de moule (2) négative et une seconde partie de moule (3) négative qui forment, dans un état fixé l'une contre l'autre, le moule de cuisson (1),
- dans lequel les deux parties de moule (2, 3) délimitent une cavité (4), dans laquelle de la pâte peut être introduite par une ouverture de réception (5) réalisée respectivement partiellement par les deux parties de moule (2, 3),
- avec au moins un élément de fixation (6),
- dans lequel la première partie de moule (2) est ou peut être fixée au moyen de l'au moins un élément de fixation (6), de préférence au moyen de deux éléments de fixation (6), en silicone sur la seconde partie de moule (3),
- dans lequel l'au moins un élément de fixation (6) est réalisé comme une pince en silicone (7) avec deux bras de pince (8a, 8b), qui pressent l'une contre l'autre des zones de fixation (9a, 9b) respectives des deux parties de moule (2, 3) dans l'état monté du moule de cuisson (1),
**caractérisé en ce que**
les deux parties de moule (2, 3) présentent respectivement un bord de fixation (12a, 12b) de type collet dépassant orthogonalement de la zone de fixation (9a, 9b) de la partie de moule (2, 3), sur lequel l'élément de fixation (6) peut être fixé pour la fixation des deux parties de moule (2, 3).

2. Moule de cuisson (1) selon la revendication 1,
**caractérisé en ce que**
les deux bras de pince (8a, 8b) sont réalisés de façon élastique et, dans l'état monté du moule de cuisson (1), sont précontraints contre les deux parties de moule (2, 3) et pressent ces deux parties (2, 3) l'une contre l'autre par exercice d'une force de ressort.

3. Moule de cuisson (1) selon la revendication 1 ou 2,
**caractérisé en ce que**
les deux parties de moule (2, 3) présentent respectivement au moins une zone de contact (10a, 10b) réalisée comme une plaque, dans lequel les zones de contact (10a, 10b) reposent l'une contre l'autre de préférence sans fente dans l'état monté du moule de cuisson (1).

4. Moule de cuisson (1) selon l'une quelconque des revendications précédentes,
**caractérisé en ce que**
les deux bras de pince (8a, 8b) de la pince en silicone (7) sont réalisés de telle manière qu'ils forment, dans l'état monté du moule de cuisson (1), une liaison à complémentarité de formes avec les deux parties de moule (2, 3).

5. Moule de cuisson (1) selon l'une quelconque des revendications précédentes,
**caractérisé en ce que**
- la pince en silicone (7) est réalisée en tant que rail profilé (11),
- le rail profilé (11) présente un profil ouvert d'un côté avec une section transversale sensiblement en forme de C,
- les deux bras de pince (8a, 8b) viennent en prise derrière/entourent au moins partiellement, dans l'état monté du moule de cuisson (1), les bords de fixation (12a, 12b) de type collet des deux parties de moule (2, 3).

6. Moule de cuisson (1) selon l'une quelconque des revendications précédentes,
**caractérisé en ce que**
le silicone présente une résistance à la chaleur d'au moins 250 °C.
